Europäisches Patentamt

European Patent Office

Office européen des brevets

(11) Publication number: **0 425 403 A2**

# EUROPEAN PATENT APPLICATION

(21) Application number: **90480116.4**

(22) Date of filing: **14.08.90**

(51) Int. Cl.⁵: **G06F 15/20**

(30) Priority: **23.10.89 US 425612**

(43) Date of publication of application:
**02.05.91 Bulletin 91/18**

(84) Designated Contracting States:
**DE FR GB**

(71) Applicant: **International Business Machines Corporation**
**Old Orchard Road**
**Armonk, N.Y. 10504(US)**

(72) Inventor: **Natarajan, Bharath**
**2170 Meadowind Lane**
**Marietta, Georgia 30062(US)**

(74) Representative: **Bonneau, Gérard**
**Compagnie IBM France Département de Propriété Intellectuelle**
**F-06610 La Gaude(FR)**

(54) **A computer based method for handling re-work shop orders by item analysis.**

(57) A computer based method facilitates the capability for shop re-work orders to be effectively scheduled, knowing the time and location of item availability that is needed to correct the problem found in the re-work shop orders. The system automatically identifies alternate components or items that can be used in the shop orders and provides realistic shipping dates so that the re-work shop orders can be scheduled. If components or items are not available, the system provides feedback to the material planning system to re-plan items using traditional material planning systems such as the MRP (material requirement planning) systems and provide projected shipping dates so that re-work orders can be scheduled.

FIG.1

# A COMPUTER-BASED METHOD FOR HANDLING RE-WORK SHOP ORDERS BY ITEM ANALYSIS

The present invention generally relates to a computer based method for handling re-work shop orders by item analysis; appropriate components to be used in the re-work shop orders are identified once defective components are also identified. The method includes steps for identifying replacement components after determining the engineering change (EC) level, alternate components, if any, and the location of the components for availability.

The process of designing, developing and manufacturing a new product, or making major changes to existing products, presents many challenges to product managers and manufacturing managers to bring a product to market for the least cost, within schedule, while maintaining product quality. In today's highly competitive industries, product managers and manufacturing managers require information to address many problems that arise because of the complexity of new products and the complexity of world-wide production and the changing nature of competition. The requirement that products be manufactured for the least possible cost is important in all industries. Of all the costs associated with selling products and services, none is more important than the cost of customer service. When customers require items to be re-worked, or field returns, those orders require special attention and sometimes urgent attention to satisfy customer needs. As re-work orders are received from the customers for faulty components, they have to be first sorted for fault diagnosis through appropriate tests. Once the tests identify the cause of the defect, the appropriate replacement item needs to be defined. If the defective item needs to be changed, a search needs to be made as to the current EC (engineering change) level and the assigned part number, if different from the previ ous number. If an alternate part number has been assigned, those have to be identified. Once it is identified, the location and availability of the part has to be determined.

Current planning systems such as COPICS (Communications Oriented Production Information and Control System) sold by IBM Corporation and similar systems marketed by MSA and Cullinet, for example, have the capability to allocate component inventory for use in re-work orders; however, these systems do not have the capability to identify replacement components based on engineering level determination. The user has to manually identify the revised engineering change number and identify the replacement component. Most often, the user on the shop floor is not aware of any engineering changes to the components that have taken place. This may result in faulty or less effective components being replaced on the shop floor.

What is needed is a system that will automatically identify the replacement components based on current engineering change levels and identify the availability of replacement component(s) and their location. The automated system should also provide allocations based on availability and let the user know of the projected delivery date for start of re-work orders based on component/item ship leadtime. Planning systems such as IBM's COPICS product provide the capability for engineering change affectivity that identifies when an engineering change will need to be implemented. However, they do not have the capability to identify changed component number given the old component number. The production monitoring and control module within IBM's COPICS product provides the capability to determine the quantity of order completion. The physical capability of testing re-work orders and determining the defects in the re-work orders is considered as part of the manufacturing shop floor systems.

It is therefore an object of the present invention to provide an easy to use system that first identifies rework items and components for availability by first checking to see if the items were replaced by new items based on engineering change and then estimates the re-work schedule date based on item/component availability.

It is another object of the invention to provide a system of the type described which, when the item/component is not yet available, generates appropriate feedback to a material planning system to plan for the materials though standard planning processes, such as material requirement planning (MRP).

It is a further object of the invention to provide a system that prompts the production planner to alternate component/item availability and provide projected shipping dates for starting re-work shop orders.

The subject invention facilitates the capability for shop re-work orders to be effectively scheduled, knowing the time and location of item availability that is needed to correct the problem found in the re-work shop orders. The system automatically identifies alternate components or items that can be used in the shop orders and provides realistic shipping dates so that the re-work shop orders can be scheduled. If components or items are not available, the system provides feedback to the material planning system to re-plan items using traditional material planning systems such as the MAP (material requirement planning) systems and provide projected shipping dates so that re-work orders can be scheduled.

The foregoing and other objects, aspects and advantages will be better understood from the following detailed description of a preferred embodiment of the invention with reference to the drawings, in which:

Figure 1 is a system block diagram of the total manufacturing process from planning through execution;

Figure 2 is a block diagram that illustrates the logical steps involved in determining the re-work shop order components or items that are needed to replace defective components or items found in the re-work shop orders; and

Figure 3 is a block diagram that illustrates the relative position of the user with respect to the re-work scheduling system and a relational database.

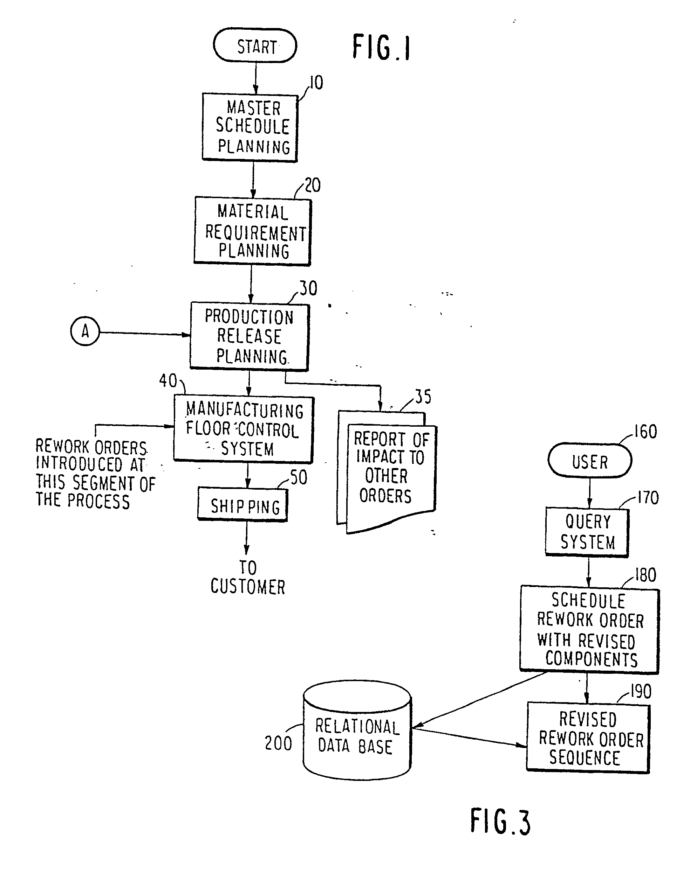

Referring now to the drawings, and more particularly to Figure 1, there is shown in functional block diagram form the processes that take place in a typical manufacturing environment from the time of planning through production and shipment. The key parts of the system includes Master Schedule Planning 10, where items are planned at the completed item level, a Material Requirement Planning (MRP) system 20, where completed item requirements are exploded into sub-components and planned, and the Production Release Planning System 30, where shop orders planned at the material requirement planning level are set for releasing to the shop floor. The next part of the system, the manufacturing floor control system 40, is the segment of the process where re-work orders are introduced and where the scheduling of the orders takes place. This is the segment of the process which is addressed by the present invention. The next block is the Shipping segment 50 where items are shipped to the customer as in any corporate enterprise.

The processes shown in block diagram form in Figure 1 are shown only as a reference to indicate the positioning of the problem of re-work component analysis. It is not the intent of the present description to define these traditional applications. Many systems are commercially available which address these applications.

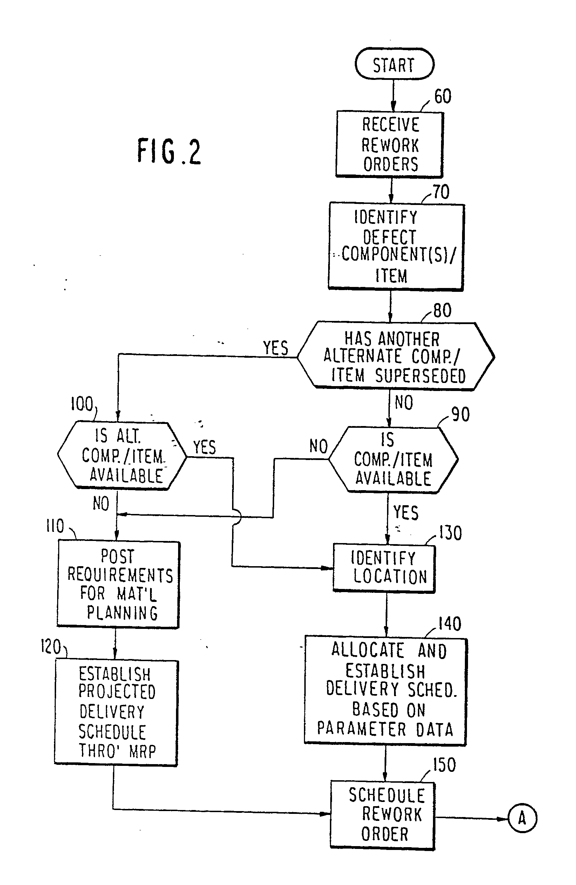

Figure 2 illustrates the logic of the component identification system when re-work orders are introduced as part of the floor control system 40. The logic described involves analysis of the database to identify if an alternate component or item has been identified for the defective component or item. If so, the system identifies the component or item and checks for availability. If the component or item is not available, the system requests the component or item in question to be re-planned as part of the next material planning cycle 20.

The process begins at function block 60 where re-work orders are received. Defective components or items are identified in function block 70. When re-work orders come from the customer, the faulty components or items are first diagnosed for the cause of the defects. This process will vary from item to item depending on the item and the process associated with it. In decision block 80, a test is made to determine whether the item in question has been changed or superseded by another alternate item due to any engineering change. If it has not changed, a check is made in decision block 90 to determine if the item is available for use. If an alternate item has been defined, a test is made in decision block 100 to determine if the new item is available in inventory. If either the original item or the alternate item is available, the location of availability is determined from the inventory database, as indicated by function block 130.

It is appropriate to point out that the user would query against a host database such as IBM Corporation's COPICS product or that of similar products. If the item in question is available, the parameter data associated with the item would provide information regarding the availability. This is indicated by function block 140. If the item(s) are not available, they have to be re-planned in a process such as MRP as shown in Figure 1 at block 20. Such MRP systems will project component availability through an interface to traditional purchasing systems. More specifically, feedback to the MRP system is provided to the MRP system to post the requirements for material planning in function block 110. The MRP system then establishes a delivery schedule in function block 120.

Once the items are identified for availability, the rework shop orders can be scheduled, as indicated in function block 150. The connector A indicates feedback to the production release planning system 30 in Figure 1. In response to this feedback, the production release planning system generates and displays to the user a report of impact to other orders at 35.

Figure 3 illustrates the key parts of the system from the user point of view. The key parts are the database 200 and the query system 170. The database can be any of several products currently available, but for the purpose of the preferred embodiment, IBM Corporation's Database 2 (DB2) is used. DB2 is a relational database system, but it will be understood by those skilled in the art that other databases, including hierarchical databases, could be used. General information on IBM's DB2 can be had with reference to publication GC26-4073-2 published by IBM Corporation. The query system can be an expert system, but for purposes of the preferred embodiment of this invention, IBM's structured extended executor (REXX) language is used. A description of the REXX language is provided in "Virtual Machine/Systems Product, System Product Interpreter User's Guide", Release 4, publication SC24-5238-2, published by IBM Corporation.

The user 160 can query the current status, completion date and the priority sequence of any job in question using the query system 170. The query system 170 interfaces with the Schedule re-work order with revised component/item module 180 which accesses the database 200 and arrives at the revised schedule. The block 180 reflects the essence of the logic as illustrated in Figure 2. The database 200 as defined has the capability to capture the decision variables tasted and the results obtained for each test. The user can access the results using the query facility at a later date, if needed, and obtain an output in the form of a revised order sequence for dispatch block 190. This enhances the analysis capability of future test data. This also provides an additional enhancement to the system.

When re-work shop orders are introduced in the production process, the operations manager is very concerned about the order as well as other orders on the shop floor. He or she would also be concerned with the excessive workin-process inventory and the cycle time needed to complete all orders on the shop floor. This order schedule system gives the manager the needed capability to recover from the situation, if possible, or suggest the best alternative. Having taken a course of action as analyzed by the production dispatch system, the planning system and the production release system need to be informed of the revised plan and status of the operation centers in order to effectively plan future orders. This is illustrated by the connector A in Figures 1 and 2 and is an added enhancement to the system provided by the invention.

The decision making capability to define the correct component or item based on revisions or alternatives that might have superceded an existing component or item due to engineering changes provides the artificial intelligence to the system.

## Claims

1. A computer-based method for handling re-work shop orders by item analysis and providing for the automatic identification of the correct component or item considering the engineering changes that might have taken place and that would improve scheduling of re-work orders, said method being characterized in that it comprises the steps of:
monitoring (60) re-work orders generated by a re-work order scheduling process;

determining (80) if a faulty component or item has been superceded by another component or item as indicated by an engineering change notice in a computer database;

checking (100) the computer database for component availability once a determination is made that an alternate or replacement component or item has been identified in an engineering change notice;

identifying (110) the location of the component or item needed for a re-work order; and

allocating (120) appropriate quantity and establishing a delivery schedule based on the parameter data for the component or item in the computer database.

2. The method raccording to claim 1, characterized in that it comprises the step of providing said delivery schedule to a production release planning system.

3. The method according to claim 1 or 2, wherein if the component is not available, characterized in that it comprises the steps of: providing feedback to a material planning system to re-plan the items that are not currently available; and

establishing projected delivery schedule based on material planning system outputs.

4. The method according to claim 3 wherein said computer system includes a query system, said method being further characterized in that it further includes the steps of:

capturing in said computer database decision variables pertaining to re-work orders along with parameters identifying a component or item associated with the re-work order;

responding to a user input via the query system to access information pertaining to the re-work order and a component or item for replacement; and

displaying the inventory status of the component or item used in the re-work order.

5. The method as according to claim 1 or 2 further characterized in that it includes the steps of:

displaying re-work order schedules and an impact to other orders in the process due to the re-work orders; and

providing a manual override capability to the schedule as determined by the user.

# FIG.1

START

MASTER SCHEDULE PLANNING — 10

MATERIAL REQUIREMENT PLANNING — 20

A → PRODUCTION RELEASE PLANNING — 30

40 — MANUFACTURING FLOOR CONTROL SYSTEM

REWORK ORDERS INTRODUCED AT THIS SEGMENT OF THE PROCESS

REPORT OF IMPACT TO OTHER ORDERS — 35

SHIPPING — 50

TO CUSTOMER

USER — 160

QUERY SYSTEM — 170

SCHEDULE REWORK ORDER WITH REVISED COMPONENTS — 180

REVISED REWORK ORDER SEQUENCE — 190

RELATIONAL DATA BASE — 200

# FIG.3

5

# FIG.2

START

60 — RECEIVE REWORK ORDERS

70 — IDENTIFY DEFECT COMPONENT(S)/ ITEM

80 — HAS ANOTHER ALTERNATE COMP./ ITEM SUPERSEDED

YES

NO

100 — IS ALT. COMP./ITEM AVAILABLE

YES

NO

90 — IS COMP./ITEM AVAILABLE

NO

YES

110 — POST REQUIREMENTS FOR MAT'L PLANNING

120 — ESTABLISH PROJECTED DELIVERY SCHEDULE THRO' MRP

130 — IDENTIFY LOCATION

140 — ALLOCATE AND ESTABLISH DELIVERY SCHED. BASED ON PARAMETER DATA

150 — SCHEDULE REWORK ORDER

A